# EUROPÄISCHE PATENTSCHRIFT

(11) **EP 0 800 907 B1**
(45) Veröffentlichungstag und Bekanntmachung des Hinweises auf die Patenterteilung: **18.04.2001**
(21) Anmeldenummer: 97101521.9
(22) Anmeldetag: 31.01.1997
(51) Int. Cl.: B29C 45/28

(54) **Nadelverschlussdüse mit Spritzgiessform und Verschlussnadel**
Needle shut-off nozzle with injection mold and shut-off needle
Buse à fermeture par aiguille avec moule d'injection et aiguille de fermeture

(30) Priorität: 10.04.1996 DE 19614171; 24.05.1996 DE 19621084
(43) Veröffentlichungstag der Anmeldung: 15.10.1997
(73) Patentinhaber: Männer, Otto, D-79353 Bahlingen (DE)
(72) Erfinder: Männer, Otto, D-79353 Bahlingen (DE)
(74) Vertreter: Schmitt, Hans, Dipl.-Ing.

(56) Entgegenhaltungen:
- DE-A- 3 442 023
- DE-A- 4 315 076

## Beschreibung

Die Erfindung betrifft eine Nadelverschlußdüse mit Spritzgießform, welche Nadelverschlußdüse ein Gehäuse und eine Werkstoffzufuhr zu dem Gehäuse und in das Innere des Gehäuses und eine axial in diesem Gehäuse verstellbare Verschlußnadel sowie ferner einen mittels der Verschlußnadel verschließbaren Auslaß für den Werkstoff aufweist.

Derartige Nadelverschlußdüsen sind in unterschiedlichen Formen und Konstruktionen bekannt. Beispielsweise kennt man eine solche Nadelverschlußdüse aus DE-38 43 035 C2 und aus EP-0 374 346 B1.

Der Auslaß der Nadelverschlußdüse befindet sich dabei an einem auf die Spritzgießform aufsetzbaren Ende des Gehäuses und ist als Öffnung dieses Gehäuses ausgebildet, in die die Verschlußnadel in deren Schließstellung eingreift und aus welcher die Verschlußnadel zum Öffnen für die Spritzgießposition in axialer Richtung zurückziehbar ist. Ist der Spritzvorgang beendet, wird also die Verschlußnadel in axialer Richtung wieder so weit vorgeschoben, daß die als Auslaß dienende Öffnung des Gehäuses vom freien Ende der Verschlußnadel im wesentlichen ausgefüllt wird, so daß kein weiterer Werkstoff diesen Auslaß passieren kann.

Beim Spritzgießen mit einer solchen Nadelverschlußdüse läßt sich in der Regel nicht vermeiden, daß zumindest eine Spur des Angusses an dem gespritzten Werkstück erkennbar ist. Vor allem muß beim Spritzen sehr flacher Werkstücke an diesen ein zusätzliches Angußteil vorgesehen werden, welches anschließend durch Stanzen entfernt werden muß. Dieses durch Stanzen zu entfernende Angußteil wird auch als "Filmanguß" bezeichnet. Ein solcher Filmanguß bedeutet eine Vergrößerung der Form und außerdem insbesondere beim späteren Stanzen auch einen zusätzlichen Arbeitsaufwand.

Aus DE 43 15 076 A1 ist eine Nadelverschlußdüse mit Spritzgießform der eingangs genannten Art für ein gleichzeitiges und/oder sequentielles Einspritzen von zwei unterschiedlichen Fluiden durch einen Eingußkanal bekannt, wobei die in diesem Dokument als Ventilnadelteil bezeichnete Verschlußnadel ein vorderes Teil mit einem verminderten Außendurchmesser aufweist, so daß dort das zu spritzende Material außenseitig an dieser Verschlußnadel entlangfließen kann. Bezüglich des Angusses bestehen dabei vergleichbare Verhältnisse wie vorstehend schon beschrieben.

Der Erfindung liegt die Aufgabe zugrunde, eine Nadelverschlußdüse der eingangs genannten Art zu schaffen, mit welcher ein bei der Herstellung von flachen Spritzgießteilen notwendiger Filmanguß vermieden werden kann.

In Verbindung mit dem Oberbegriff des Patentanspruches 1 wird diese Aufgabe dadurch gelöst, daß die Verschlußnadel in ihrem Inneren einen in ihrer Längsrichtung verlaufenden Kanal für den Werkstoff hat, daß dieser Kanal kürzer als die Verschlußnadel ist, daß im Inneren des Gehäuses ein durch die Verschlußnadel führender Eintritt in den Kanal vorgesehen ist, daß dieser Kanal vor dem der Spritzgießform zugewandten freien Ende der Verschlußnadel als Auslaß wenigstens einen seitlichen Austritt hat und daß die Verschlußnadel in ihrer Spritzgießposition mit dem diesen Austritt aufweisenden Bereich aus dem einen Durchlaß für die Nadelverschlußdüse aufweisenden Gehäuse herausragt und/oder in die Spritzgießform eingreift.

In gegenüber dem bisherigen Stand der Technik ungewöhnlicher Weise wird also der Spritzgießwerkstoff nicht durch den Durchlaß des Gehäuses der Nadelverschlußdüse in die Form gespritzt, nachdem die Verschlußnadel in axialer Richtung zurückgezogen ist, sondern die Verschlußnadel wird in entgegengesetzter Richtung verstellt, damit der an ihr als Auslaß vorgesehene Austritt aus dem Gehäuse hervortritt, so daß dann der Spritzgießwerkstoff durch die Nadel selbst gezielt in die Form eingespritzt werden kann. Der Durchlaß des Gehäuses dient in diesem Falle also als zusätzliche Nadelführung und - in noch zu erläuternder Weise - auch als Mittel zum Verschließen des Austrittes.

Durch diese Gestaltung der Nadelverschlußdüse mit wenigstens einem seitlichen Austritt aus einem Kanal im Inneren der Verschlußnadel ist es möglich, auch sehr flache Gegenstände zu spritzen, weil der Austritt aus der Nadel zum Beispiel in axialer Richtung entsprechend schmal - als Schlitz oder rechteckiges oder auch rundes Loch - gestaltet ist und seitlich unmittelbar an der flachen Form positioniert werden kann, so daß der durch den Kanal in der Nadel zugeführte Werkstoff aus der Nadel seitlich direkt in diese flache Form eintreten kann. Durch diesen unmittelbaren Angriff des Austrittes an der Form und damit an dem gespritzten Werkstück ist es möglich, den in dem Durchtritt befindlichen Werkstoff beim Herausnehmen des Werkstückes aus der Form und/oder bei dem zuvor erfolgenden Zurückziehen der Nadel vollständig abzutrennen, so daß ein Anguß an dem Werkstück nicht erkennbar ist.

Zweckmäßig ist es dabei, wenn der Kanal im Inneren der Verschlußnadel vor deren freiem Ende, insbesondere an dem seitlichen Austritt endet. Dadurch kann gegenüber einem eventuell noch etwas weiter verlaufenden Kanal im Inneren der Verschlußnadel ein Totraum vermieden werden.

Der/die seitlichen Austritte der Verschlußnadel können in der aus der Spritzgießposition zurückgezogenen Stellung von der Innenwandung des Durchtrittes des Gehäuses der Nadelverschlußdüse verschlossen sein. Somit erhält der Durchtritt für die Verschlußnadel an dem Gehäuse insofern eine andere Funktion, als er einerseits das freie Ende der Nadel führt und andererseits den seitlichen Austritt bei zurückgezogener Nadel verschließt. Somit bleibt zwar erhalten, daß der Durchlaß und die Nadel zusammen die Werkstoffzufuhr zu der Form in Schließstellung unterbinden, jedoch wird die Nadel dazu gegenüber der bisherigen Lösung in entgegengesetzter Richtung verschoben.

Besonders vorteilhaft ist es dabei, wenn die Verschlußnadel mit ihrem seitlichen oder radialen Austritt so weit in das Gehäuse und dessen Durchtritt zurückziehbar ist, daß der Austritt in der dadurch eingenommenen Schließstellung im Wirkbereich einer an dem Gehäuse vorgesehenen Heizung angeordnet ist. Somit bleibt der im Inneren der Verschlußnadel befindliche Werkstoff auch in Schließstellung beheizt und somit flüssig, so daß er bei einem erneuten Spritzgießvorgang sofort und ohne vorhergehende Reinigungsarbeiten aus der Verschlußnadel ausgespritzt werden kann.

Die Länge des im Inneren der Verschlußnadel insbesondere koaxial und zentral angeordneten Kanales kann so bemessen sein, daß auch der Eintritt in den Kanal bei in Schließstellung zurückgezogener Verschlußnadel innerhalb des Gehäuses und/oder innerhalb einer dem Gehäuse zugehörenden Nadelführung angeordnet ist. Eine weitergehende Erstreckung des Kanales ist nicht erforderlich, sondern es genügt, wenn dieser Kanal nur über eine relativ geringe Teil-Länge der Verschlußnadel vorhanden ist, die außerhalb dieses Bereiches in üblicher Weise einen Vollquerschnitt haben kann. Praktisch braucht dieser im Inneren der Verschlußnadel angeordnete Kanal nur so lang zu sein, daß er bei ausgeschobener Verschlußnadel das Innere des Gehäuses der Nadelverschlußdüse mit der Form verbindet.

Eine Ausgestaltung der Erfindung kann darin bestehen, daß der im Inneren der Verschlußnadel angeordnete Kanal mehrere seitliche Austritte hat, die radial oder schräg und/oder über eine Rundung von dem Kanal abgehen und zur Außenseite der Nadel führen und alle in der gleichen Querschnittsebene der Nadel oder mit axialem Abstand zueinander in der Verschlußnadel angeordnet sind. Mehrere Austritte können dazu dienen, entweder ein größeres sehr flaches Werkstück zu spritzen oder aber gleichzeitig mit einer Nadelverschlußdüse mehrere Werkstücke herzustellen. Bei einem räumlich geformten Werkstück könnten auch in axialem Abstand zueinander an der Verschlußnadel angeordnete Austritte wirksam sein.

Da der Kanal im Inneren der Verschlußnadel vor deren freiem Ende insbesondere an dem Austritt endet, ergibt sich an dem freien Ende noch ein gewisser Überstand gegenüber diesem Kanal. Zweckmäßig ist es, wenn der das Ende des Kanales und seinen seitlichen Austritt überragende Teil der Verschlußnadel als abdichtender Überstand ausgebildet ist, der in Schließstellung den Durchtritt des Gehäuses ausfüllt und insbesondere teilweise über diesen Durchtritt aus dem Gehäuse vorsteht und bündig mit dem die Verschlußnadel aufnehmenden Formeinsatz und/oder dem damit zusammenwirkenden Kernformeinsatz ist. Einerseits wird dadurch die Abdichtung des Austrittes innerhalb des Durchlasses des Gehäuses verbessert und andererseits kann der Formeinsatz oder der Kernformeinsatz diesen Überstand zusätzlich führen, so daß beim Verstellen der Verschlußnadel in Offenstellung der Austritt mit größtmöglicher Präzision zu der Form gelangen kann.

Der anspritzseitige, die Verschlußnadel aufnehmende Formeinsatz und der damit zusammenwirkende Kernformeinsatz der Spritzgießform können koaxial und fluchtend zu dem Durchtritt des Gehäuses der Nadelverschlußdüse eine Lochung oder Bohrung aufweisen, deren Innenquerschnitt dem Außenquerschnitt des dichtenden Überstandes der Verschlußnadel entspricht, und dieser Überstand der Verschlußnadel kann bei deren Spritzposition in die Lochung oder Bohrung des Kernformeinsatzes, insbesondere dicht, eingreifen. Somit wird die Verschlußnadel auch beim Spritzvorgang nicht nur von dem Gehäuse, sondern auch von dem Kernformeinsatz gehalten und abgedichtet, so daß beim Ausspritzen des Werkstoffes aus dem seitlichen Austritt erzeugte Reaktionskräfte nicht zu einem Auslenken der Verschlußnadel führen können. Außerdem wird die Führung der Verschlußnadel bei ihren Verstellbewegungen verbessert. Schließlich wird verhindert, daß Spritzgießwerkstoff woanders hin als in die vorgesehene Form gelangt.

Der dem freien Ende und dem dichtenden Überstand nähere Rand des/der seitlichen Austritte kann als Kante ausgebildet sein und - bei einer gewissen Ausdehnung oder Länge dieser Kante - kann die Nadel im Bereich der Kante oder des seitlichen Austrittes gegebenenfalls abgeflacht sein. Dadurch kann ein breiterer Werkstoffstrom abgegeben und angußlos von der Kante beim Zurückziehen der Nadel unterbrochen werden.

Wird der seitliche Austritt in seiner axialen Erstreckung der Dicke des zu formenden flachen Werkstückes und in seiner quer dazu verlaufenden Richtung an die Form der Schmalseite des Werkstückes angepaßt oder die Kante in Übereinstimmung mit der entsprechenden Begrenzung der Form gebracht, kann beim Zurückziehen der Nadel der in ihr befindliche Werkstoff angußlos von dem in der Form abgetrennt werden, so daß aufgrund der unmittelbaren Einspritzung aus dem Austritt in die Form durch diesen Trennvorgang kein Angußrest an dem Werkstück verbleiben kann. Somit kann auch vermieden werden, daß in der Form auch noch Platz für einen Filmanguß berücksichtigt werden muß, weil der Werkstoff aus dem Austritt der Nadel unmittelbar in die Form selbst eingespritzt werden kann.

Der Eintritt in den in der Verschlußnadel angeordneten Kanal kann durch eine seitliche Aussparung oder Ausfräsung der Nadel gebildet sein, die mit dem Anfang des Kanales eine Verschneidung bildet. Zwar könnte der Eintritt in den Kanal auch durch eine Bohrung oder Schlitzung gebildet sein, jedoch ist eine ausgefräste Aussparung insofern günstiger, als dadurch ein stetiger und den Kanalquerschnitt besser berücksichtigender Zutritt für den Werkstoff geschaffen wird, so daß auch möglichst wenig Widerstand durch Umlenkungen oder dergleichen auftritt.

Dabei kann der Kanal im Bereich der seitlichen Aussparung enden, so daß auch an dieser Stelle Toträume vermieden werden.

Für eine besonders günstige Material- und Werkstoffzufuhr ist es vorteilhaft, wenn die Aussparung an ihrem dem freien Ende der Nadel abgewandten Anfang zunächst geringfügig und in Erstreckungsrichtung der Nadel allmählich schräg zunehmend in den Nadelquerschnitt eingearbeitet ist, so daß zusammen mit der Innenwand des Gehäuses der Nadelverschlußdüse eine im wesentlichen vorsprungfreie stetige Werkstoffzuführung zu dem Kanal ausgebildet ist. Dabei kann die Gehäusewand in entsprechender Richtung schräg verlaufen, so daß auch ein im wesentlichen gleichbleibender Querschnitt für die Werkstoffzuführung beibehalten bleibt und dadurch entsprechend gute Bedingungen für den einfließenden Werkstoff und dessen gleichmäßige Zuführung vorliegen.

Die Verschlußnadel kann einen im wesentlichen kreisrunden Querschnitt haben und der Kanal kann in dem Zentrum dieses Querschnittes angeordnet sein und vorzugsweise ebenfalls einen kreisförmigen Querschnitt haben. Solche Teile und Kanäle mit kreisförmigem Querschnitt können besonders einfach hergestellt werden. Beispielsweise kann der Kanal von dem freien Ende her in die Nadel eingebohrt und dann durch ein aufgesetztes oder eingesetztes Teil verschlossen sein. Die Nadel selbst kann in an sich bekannter Weise ebenfalls einen kreisförmigen Querschnitt haben, der lediglich im Bereich der Aussparung nur teilkreisförmig ist. Somit sind auch die Führungsöffnungen oder -bohrungen für die Nadel entsprechend einfach herstellbar.

Damit der zugeführte Werkstoff innerhalb des Gehäuses der Nadelverschlußdüse nicht durch die Nadel in zwei Ströme aufgeteilt wird und möglichst gezielt unmittelbar der Aussparung und dem Kanal im Inneren der Nadel zugeführt wird, ist es zweckmäßig, wenn die Innenhöhlung des Gehäuses exzentrisch auf der Seite der an der Verschlußnadel angeordneten, zur Werkstoffzuführung in den Kanal dienenden Aussparung angeordnet ist und das Gehäuse in seinem Inneren eine Führung der insbesondere konzentrisch in ihm angeordneten Verschlußnadel auf der dieser Innenhöhlung abgewandten Seite hat, die über mehr als den halben Umfang der Verschlußnadel reicht, so daß an dieser Führung im Bereich der Aussparung der Nadel ein Spalt für den Durchtritt des Spritzgießwerkstoffes freibleibt. Somit kann der Spritzgießwerkstoff über diesen Spalt unmittelbar zu der Aussparung und dadurch in den Kanal im Inneren der Verschlußnadel gelangen, ohne die Verschlußnadel außenseitig zu umfließen.

An dem dem Austritt des Gehäuses entgegengesetzten Ende dieses Gehäuses kann eine die Verschlußnadel an ihrem gesamten Querschnitt führend umschließende, als Buchse ausgebildete Nadelführung angeordnet sein und die Werkstoffzufuhr in das Innere des Gehäuses kann als Zuführkanal ausgebildet sein, dessen Eintritt von der Stirnseite bis zu seiner Mündung im Inneren des Gehäuses durch die in radialer Richtung einen Teil der Stirnseite der Nadelverschlußdüse bildende Nadelführungs-Buchse verläuft, wobei insbesondere zwischen der Außenseite der Buchse und der diese aufnehmenden Ausnehmung des Düsengehäuses zumindest in dem seinem Widerlager gegenüber dem Formeinsatz benachbarten Bereich eine Isolierung, zum Beispiel ein Luftspalt angeordnet ist. Somit können Wärmeverluste gerade in diesem Bereich vermieden werden, so daß der Werkstoff bestmöglich verflüssigt in das Gehäuse und damit auch in den Kanal im Inneren der Nadel gelangt und die Gefahr einer vorzeitigen Verfestigung des Werkstoffes ausgeschlossen wird. Die an der Außenseite der Nadelverschlußdüse vorgesehene Heizung kann dann unter Umständen auch aufgrund dieser Maßnahme mit weniger großer Leistung betrieben werden, als wenn auf dem Weg des Werkstoffes auftretende größere Wärmeverluste berücksichtigt werden müßten.

Insgesamt ergibt sich eine Nadelverschlußdüse, bei welcher gegenüber bisherigen Systemen der Auslaß für den Werkstoff als Austritt eines im Inneren der Verschlußnadel angeordneten Kanales gestaltet ist, also der Werkstoff vor seinem Einspritzen in eine Form durch die Nadel selbst und deren Austritt geführt ist, was eine Führung dieses Werkstoffes quer zur Nadelerstreckung erlaubt, so daß sehr flache Werkstücke praktisch von ihrer Schmalseite her gespritzt werden können. Da der Austritt eine der Schmalseite des Werkstückes oder der Form entsprechende Form hat, ist kein Filmanguß mehr notwendig und dennoch entstehen keine sichtbaren Teile eines solchen Angusses am fertigen Werkstück. Durch die Verlegung des Werkstoffweges teilweise in die Nadel kann also in der Form der Platz eingespart werden, der sonst für einen Filmanguß erforderlich wäre und darüber hinaus kann das Abstanzen eines solchen Filmangusses und der Abfall vermieden werden, den dieser Filmanguß darstellt. Da das Entfernen des Filmangusses und eine Nacharbeit des Werkstückes im Bereich des Angusses durch die erfindungsgemäße Anordnung vermieden wird, ergibt sich bei dem Spritzgießen solcher flacher Werkstücke auch eine entsprechende Zeitersparnis.

Nachstehend ist ein Ausführungsbeispiel der Erfindung anhand der Zeichnung näher beschrieben. Es zeigt in teilweise schematisierter Darstellung:

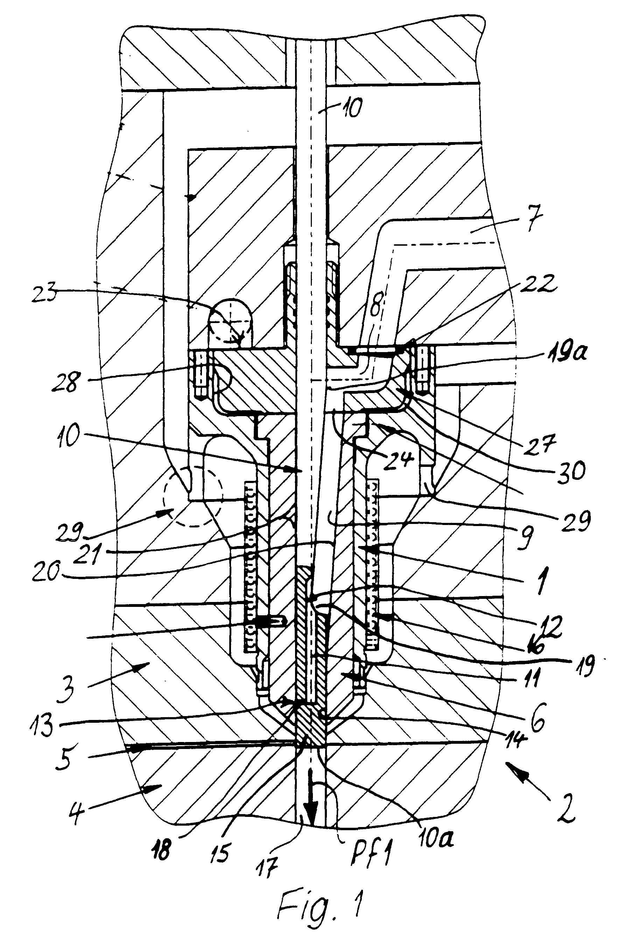

- Fig.1: einen Teillängsschnitt durch eine erfindungsgemäße Nadelverschlußdüse und die dieser benachbarten Teile der Spritzgießform, wobei die Verschlußnadel mit ihrem im Inneren angeordneten Kanal und seitlichen Austritt für den Werkstoff in Schließstellung zurückgezogen ist, und

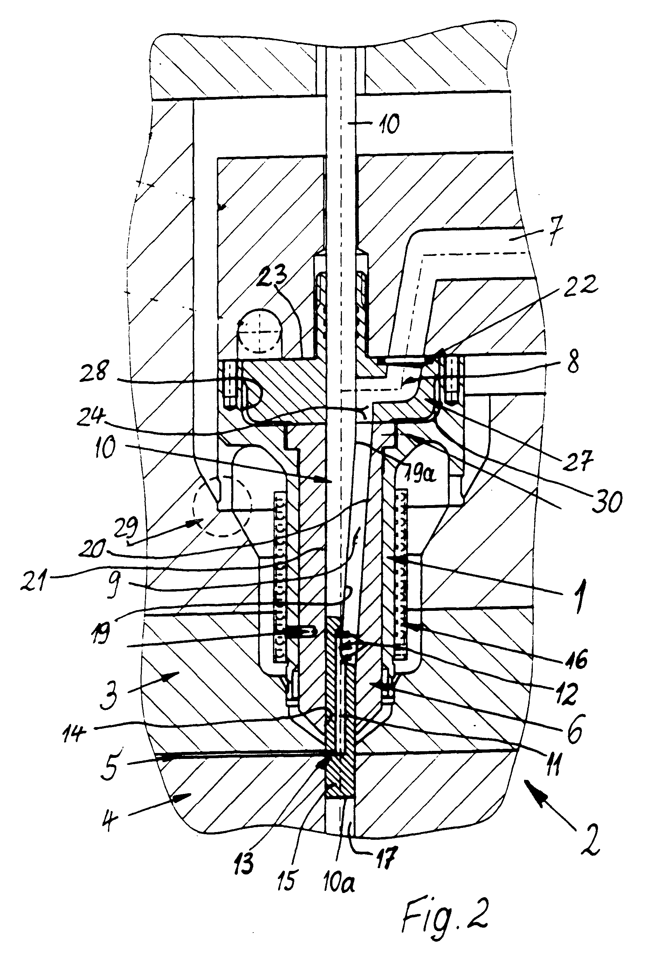

- Fig.2: eine der Fig.1 entsprechende Darstellung, bei welcher die Nadelverschlußdüse und ihr seitlicher Austritt bis auf die Höhe einer zwischen einem Formeinsatz und einem Kernformeinsatz angeordneten Form verschoben ist, so daß der Werkstoff durch den in der Nadel befindlichen Kanal und diesen Austritt unmittelbar von der Schmalseite her in die Form eingespritzt werden kann.

Eine im ganzen mit 1 bezeichnete Nadelverschlußdüse ist mit einem den Werkstoff ausgebenden Ende in eine im ganzen mit 2 bezeichnete Spritzgießform eingesetzt, wobei ein Formeinsatz 3 die Nadelverschlußdüse 1 teilweise in sich aufnimmt, während ein weiterer Formeneinsatz 4, beispielsweise der Kernformeinsatz die Spritzgießform 2 ergänzt. Zwischen beiden Formeinsätzen 3 und 4 befindet sich die Form 5 selbst, deren Kavität jeweils teilweise in den Formeinsatz 3 und den Formeinsatz 4 eingearbeitet ist.

Die Nadelverschlußdüse 1 hat ein Gehäuse 6 sowie ferner eine kanalförmige Werkstoffzufuhr 7 zu dem Gehäuse 6 und eine Werkstoffzufuhr 8 in das Innere bzw. in die Innenhöhlung 9 des Gehäuses 6. Ferner weist die Nadelverschlußdüse 1 in üblicher Weise eine axial in dem Gehäuse 6 verstellbare Verschlußnadel 10 und einen mittels der Verschlußnadel 10 in noch zu beschreibender Weise verschließbaren Auslaß für den Werkstoff auf.

In Fig.1 ist die Schließlage dieser Nadelverschlußdüse 1 und ihrer Verschlußnadel 10 dargestellt, das heißt die Zufuhr von Werkstoff durch die Werkstoffzufuhren 7 und 8 und den noch zu beschreibenden Auslaß der Nadelverschlußdüse 1 in die Form 5 ist unterbrochen und gesperrt.

Um diese Sperre aufzuheben, also die Verschlußnadel 10 in Offenstellung zu bringen, in welcher ein Spritzgießvorgang durchgeführt werden kann, wird die Verschlußnadel 10 aus der in Fig.1 dargestellten Lage in Richtung des in Fig.1 angedeuteten Pfeiles Pf1 axial über das in den Formeinsatz 3 eingreifende Ende der Nadelverschlußdüse 1 und ihres Gehäuses 6 hinaus axial verstellt und verschoben, bis sie die in Fig.2 dargestellte Lage einnimmt, in der der Werkstoff in die Form 5 gelangen kann.

Damit diese gegenüber bisher bekannten Nadelverschlußdüsen umgekehrte Verstellbewegung der Verschlußnadel 10 zum Öffnen der Nadelverschlußdüse 1 führt und vor allem der Werkstoff von der Schmalseite her in eine sehr flache Form 5 eingespritzt werden kann, um ein möglichst flaches Werkstück angußfrei spritzen zu können, hat die Verschlußnadel 10 in ihrem Inneren einen in ihrer Längsrichtung verlaufenden Kanal 11 für den Werkstoff, welcher kürzer als die Verschlußnadel 10 ist. Man erkennt diesen Kanal 11 in beiden Figuren aufgrund der teilweise im Längsschnitt gehaltenen Darstellung der Verschlußnadel 10.

Dabei erkennt man außerdem, daß in der Innenhöhlung 9 des Gehäuses 6 der Nadelverschlußdüse 1 ein durch die Verschlußnadel 10 führender Eintritt 12 in den Kanal 11 vorgesehen ist, der sich dabei an dem in der Zeichnung oberen Ende dieses Kanales 11 befindet und einen seitlichen oder radialen Zutritt des Spritzgießwerkstoffes zu dem Kanal 11 und dessen Anfangsbereich ermöglicht, so daß der Werkstoff dann durch den Kanal im Inneren der Verschlußnadel 10 weiterfließen kann.

Vor dem der Spritzgießform 5 zugewandten freien Ende 10a der Verschlußnadel 10 ist als der schon erwähnte Auslaß wenigstens ein seitlicher Austritt 13 aus diesem Kanal 11 vorgesehen, aus welchem der Werkstoff also bei in Fig.2 verschobener Offenstellung in die Form 5 eingespritzt werden kann. Dabei ist dieser etwa radiale Austritt 13 an der dem Eintritt 12 gegenüberliegenden Seite der Verschlußnadel 10 angeordnet, jedoch ist auch eine demgegenüber geänderte Lage möglich. Dabei erkennt man, daß dieser den Auslaß der Nadelverschlußdüse 1 bildende, an der Verschlußnadel 10 vorgesehene Austritt 13 eine sehr geringe axiale Ausdehnung haben kann, also praktisch einen Schlitz bildet, der unter Umständen eine geringere Höhe als die Form 5 hat. In Spritzgießposition ragt die Verschlußnadel 10 gemäß Fig.2 mit diesem den Austritt 13 aufweisenden Nadelbereich aus dem einen Durchtritt 14 für die Verschlußnadel aufweisenden Gehäuse 6 heraus und greift in die Spritzgießform 5 bzw. die Formeinsätze 3 und 4 so ein, daß der Werkstoff von der Schmalseite her unmittelbar in die Form 5 gelangt, ohne daß noch ein Filmanguß erforderlich ist.

Nach dem Spritzgießvorgang kann dann die Verschlußnadel 10 wieder aus der in Fig.2 dargestellten Spritzgießposition in die in Fig.1 gezeichnete Schließstellung entgegen dem Pfeil Pf1 zurückgezogen werden.

Damit der Spritzgießwerkstoff nur durch den seitlichen Austritt 13 austritt und an dem Ende des Kanales 11 kein ihn in Spritzgießstellung beaufschlagender Verschluß oder dergleichen Abschluß erforderlich ist, ist im Ausführungsbeispiel vorgesehen, daß der Kanal 11 im Inneren der Verschlußnadel 10 vor deren freiem Ende 10a endet und zwar im Ausführungsbeispiel unmittelbar an dem seitlichen Austritt 13, so daß es auch nicht noch unterhalb oder seitlich des Austrittes 13 einen Totraum gibt. Diese Anordnung kann dadurch erreicht werden, daß ein ursprünglich beispielsweise vom Ende 10a her durchgebohrter Kanal 11 nachträglich wieder bis zum Austritt 13 verschlossen wird oder daß eine im Bereich des Austrittes ursprünglich endende Verschlußnadel mit dem sich in Richtung des Pfeiles Pf1 anschließenden Überstand 15 versehen wird, der beispielsweise mit der eigentlichen Verschlußnadel 10 verschweißt, insbesondere laserverschweißt sein kann.

In der zurückgezogenen Schließstellung ist der seitliche Austritt 13 der Verschlußnadel 10 von der Innenwandung des Durchtrittes 14 des Gehäuses 6 der Nadelverschlußdüse 1 verschlossen, so daß in dieser Lage einerseits die Nadel 10 diesen Durchtritt 14 ausfüllt und verschließt und andererseits die Wandung dieses Durchtrittes 14 wiederum den Austritt 13 an der Verschlußnadel 10 sperrt, so daß dadurch die Nadelverschlußdüse 1 vollständig abgeschlossen ist.

Die Verschlußnadel 10 ist gemäß Fig.1 mit ihrem seitlichen oder radialen Austritt 13 so weit in das Gehäuse 6 und dessen Durchtritt 14 zurückziehbar, daß der Austritt 13 in der dadurch eingenommenen Schließstellung im Bereich oder Wirkbereich einer an dem Gehäuse 6 vorgesehenen Heizung 16 angeordnet ist. Dadurch wird der in dem Kanal 11 und dem Austritt 13 befindliche Werkstoff auch in Schließstellung flüssig gehalten. Dies gilt selbst dann, wenn der Austritt 13, wie schon erwähnt, nur eine sehr geringe Ausdehnung hat und beispielsweise als am Umfang der Verschlußnadel 10 angeordneter schmaler Schlitz ausgebildet ist, der im Inneren der Verschlußnadel 10 bis zu dem Kanal 11 reicht.

Die Länge des koaxial und zentral in der Verschlußnadel 10 angeordneten Kanales 11 ist im Ausführungsbeispiel so bemessen, daß auch der Eintritt 12 in den Kanal 11 bei in die Schließstellung zurückgezogener Verschlußnadel 10 innerhalb des Gehäuses 6 oder zumindest innerhalb einer dem Gehäuse 6 zugehörenden, buchsenförmigen Nadelführung 27 angeordnet ist. Vor allem in Fig.1, die die Schließstellung darstellt, erkennt man deutlich, daß der Kanal 11 nur über einen relativ kurzen Teilbereich der Verschlußnadel 10 verläuft, um erreichen zu können, daß dieser Kanal 11 in Spritzgießstellung gemäß Fig.2 die Verbindung zwischen dem Inneren 9 des Gehäuses 6 und der Form 5 herstellt und zwar über die Verschlußnadel 10.

Im Ausführungsbeispiel hat der Kanal 11 nur einen etwa schlitzförmig über einen Teil des Umfanges der Verschlußnadel 10 verlaufenden Austritt 13. Es wäre aber auch möglich, daß mehrere derartige seitliche Austritte vorgesehen sind, die radial oder schräg oder auch über eine Rundung von dem Kanal 11 abgehen und zur Außenseite der Verschlußnadel 10 führen, wobei all diese Austritte 13 in der gleichen Querschnittsebene der Verschlußnadel 10 oder aber mit axialem Abstand zueinander an der Verschlußnadel 10 angeordnet sein könnten, falls zum Beispiel mehrere in derselben oder auch in verschiedenen Ebenen befindliche Formen 5 oder Bereiche einer oder mehrerer Formen 5 mit derselben Nadelverschlußdüse 1 bedient werden können sollen.

Der das Ende des Kanales 11 und seinen seitlichen Austritt 13 überragende Teil 15 der Verschlußnadel 10 ist im Ausführungsbeispiel als abdichtender Überstand 15 ausgebildet, der in Schließstellung den Durchtritt 14 des Gehäuses 6 ausfüllt und insbesondere teilweise über diesen Durchlaß 14 aus dem Gehäuse 6 vorsteht, wie man es in Fig.1 erkennt. Er ist dabei bündig mit dem die Verschlußnadel 10 aufnehmenden Formeinsatz 3 oder dem damit zusammenwirkenden Kernformeinsatz oder zweiten Formeinsatz 4 bzw. ragt sogar noch etwas in diesen hinein. Dies wird dadurch ermöglicht, daß der anspritzseitige, die Verschlußdüse 1 aufnehmende Formeinsatz 3 und der damit zusammenwirkende Formeinsatz 4 der Spritzgießform koaxial und fluchtend zu dem Durchtritt 14 des Gehäuses 6 der Nadelverschlußdüse 1 eine Lochung 17 oder Bohrung aufweisen, deren Innenquerschnitt dem Außenquerschnitt des dichtenden Überstandes 15 der Verschlußnadel 10 entspricht, wobei dieser Überstand 15 bei deren Spritzposition in die Lochung 17 des Formeinsatzes 4 insbesondere dichtend eingreift, wie man es auch in Fig.2 erkennt. Die Lochung 17 verbessert die Führung und auch die Halterung der Verschlußnadel 10 auch gegen seitliche, durch den Spritzgießwerkstoff verursachte Belastungen und sorgt für eine sichere Halterung der Verschlußnadel 10 bei geöffneter Nadelverschlußdüse 1 gemäß Fig.2, wenn der Spritzgießwerkstoff durch den oder die Austritte 13 seitlich in eine Form 5 oder Kavität eingespritzt wird und dabei daran gehindert werden muß, etwa in die nicht zu der Form 5 gehörende Fuge zwischen den Formeinsätzen 3 und 4 einzutreten.

Der dem freien Ende 10a und dem dichtenden Überstand 15 nähere Rand 18 des im Ausführungsbeispiel etwa schlitzförmigen seitlichen Austrittes 13 ist als über einen Teil des Umfanges der Verschlußnadel 10 verlaufende Kante ausgebildet, die beim Zurückziehen der Verschlußnadel 10 den in dem Austritt befindlichen Werkstoff von dem in der Form 5 befindlichen, das Werkstück bildenden Werkstoff abtrennt, so daß keine Angußteile oder Angußspuren an der Schmalseite des Werkstückes zurückbleiben, also Nacharbeiten vermieden werden.

Der Eintritt 12 in den in der Verschlußnadel 10 angeordneten Kanal 11 ist im Ausführungsbeispiel durch eine seitlich an der Nadel angeordnete Aussparung 19 oder Ausfräsung gebildet, die mit dem Anfang des Kanales 11 eine Verschneidung bildet, also diesen Anfang des Kanales 11 durchdringt, so daß dort die entsprechende Öffnung für den Eintritt 12 über eine gewisse axiale Erstreckung des Kanales 11 ausgebildet ist. Dabei endet der Kanal 11 im Bereich der seitlichen Aussparung 19, da ein weitergehender Verlauf unnötig wäre und allenfalls zu unerwünschten Toträumen führen würde.

Die Aussparung 19 ist an ihrem dem freien Ende 10a der Verschlußnadel 10 abgewandten Anfang 19a zunächst geringfügig und in Erstreckungsrichtung der Verschlußnadel 10 allmählich insbesondere schräg zunehmend in den Nadelquerschnitt eingearbeitet, so daß zusammen mit der Innenwand 20 des Gehäuses 6 der Nadelverschlußdüse 1 eine im wesentlichen vorsprungfreie stetige, etwas schräge Werkstoffzuführung zu dem Eintritt 12 in den Kanal 11 ausgebildet ist, wie man es deutlich in Fig.2 erkennt. Auch dieser Anfang 19a der Aussparung 19 befindet sich bei in Schließstellung befindlicher Verschlußnadel 10 noch innerhalb einer noch zu erläuternden buchsenförmigen Nadelführung 27.

Die Verschlußnadel 10 könnte ganz oder teilweise profiliert sein, hat jedoch im Ausführungsbeispiel einen im wesentlichen kreisrunden Querschnitt - von der Aussparung 19 abgesehen - und der Kanal 11 befindet sich in dem Zentrum dieses Querschnittes und ist seinerseits insbesondere ebenfalls mit einem solchen kreisförmigen Querschnitt versehen. Solche kreisquerschnittsförmigen Teile oder Kanäle lassen sich ebenso wie entsprechende Durchlaßsöffnungen 14 oder Lochungen 17 besonders einfach herstellen. Im Bereich des Austrittes 13 kann eine Abweichung von dem Querschnitt, beispielsweise eine Abflachung vorgesehen sein, um an dem Austritt 13 einen etwas breiteren Werkstoffstrom in eine geradlinig verlaufende Schmalseite einer Form 5 eintreten zu lassen, der dann trotzdem beim Zurückziehen der Nadel angußlos unterbrochen wird.

In Fig.1 und 2 erkennt man, daß das Gehäuse 6 nur auf einer Seite eine Innenhöhlung 9 hat, das heißt die Innenhöhlung 9 des Gehäuses 6 ist exzentrisch angeordnet und zwar auf der Seite der Verschlußnadel 10, auf der sich die Werkstoffzufuhr und die Aussparung 19 befinden. Ferner hat das Gehäuse 6 eine im wesentlichen über seine gesamte axiale Erstreckung verlaufende, insbesondere konzentrische Führung 21 für die konzentrisch in ihm angeordnete Verschlußnadel 10 auf der dieser Innenhöhlung 9 abgewandten Seite, die über mehr als den halben Umfang der Verschlußnadel 10 reicht, so daß an dieser Führung 21 im Bereich der Aussparung 19 mindestens ein Spalt für den Durchtritt des Spritzgießwerkstoffes zu dem Eintritt 12 in dem Kanal 11 freibleibt. Somit wird vermieden, daß Spritzgießwerkstoff um die Nadel 10 herum läuft und dadurch der Werkstoffstrom geteilt wird und der Spritzgießwerkstoff vor allem besser zu dem nur einseitigen Eintritt 12 in den Kanal 11 gelenkt wird.

An dem dem Austritt 14 des Gehäuses 6 entgegengesetzten Ende dieses Gehäuses 6 ist eine die Verschlußnadel 10 an ihrem gesamten Querschnitt führend umschließende, als Buchse ausgebildete Nadelführung 27 angeordnet. Die Werkstoffzufuhr 8 in das Innere 9 des Gehäuses 6 ist in diesem Falle als Zuführkanal ausgebildet, dessen Eintritt 22 von der Stirnseite 23 bis zu seiner Mündung 24 im Inneren des Gehäuses 6 durch die in radialer Richtung einen Teil der Stirnseite 23 der Nadelverschlußdüse 1 bildende Nadelführungs-Buchse 27 verläuft, wobei zwischen der Außenseite der Buchse 27 und der diese aufnehmenden Ausnehmung 28 des Düsengehäuses 6 zumindest in dem seinem Widerlager 29 gegenüber dem Formeinsatz benachbarten Bereich eine Isolierung, im Ausführungsbeispiel ein Luftspalt 30 angeordnet ist, so daß Wärmeverluste in diesem Bereich weitestgehend vermieden werden, also Ablagerungen oder Verdickungen des Spritzgießwerkstoffes praktisch ausgeschlossen sind. Entsprechend sicher kann der flüssige Zustand des Werkstoffes trotz seiner Leitung durch den im Nadelinneren befindlichen Kanal 11 und durch den Austritt 13 bis in die Form 5 und deren Kavität erhalten bleiben.

Durch die Gesamtanordnung lassen sich auch sehr flache Werkstücke unmittelbar von einer oder mehreren ihrer Schmalseiten ausspritzen, ohne daß es eines Filmangusses und entsprechender Nacharbeiten bedarf, wobei Versuche gezeigt haben, daß ein derartig hergestelltes Werkstück keinen Anguß erkennen läßt.

Die Nadelverschlußdüse 1 mit Spritzgießform 2 hat zum Spritzgießen von flachen Werkstücken von deren Schmalseite aus im Inneren der ihr zugehörenden Verschlußnadel 10 über einen Teillängsbereich dieser Verschlußnadel 10 einen Kanal 11, der im Inneren des Gehäuses 6 der Nadelverschlußdüse 1 einen Eintritt 12 und vor dem der Spritzgießform 2 zugewandten freien Ende 10a der Verschlußnadel 10 als Auslaß wenigstens einen seitlichen Austritt 13 hat, so daß die für das Spritzgießen vorgesehene Offenstellung der Nadelverschlußdüse dadurch erreicht wird, daß die Verschlußnadel 10 mit diesem Austritt 13 aus dem Gehäuse 10 so weit ausgeschoben wird, daß der seitliche Austritt 13 auf der Höhe der zu füllenden Form oder Kavität 5 zu liegen kommt, während für die Schließstellung die Verschlußnadel 10 mit diesem Austritt 13 in das Gehäuse 6 zurückziehbar ist.

## Patentansprüche

1. Nadelverschlußdüse (1) mit Spritzgießform (2), welche Nadelverschlußdüse (1) ein Gehäuse (6) und eine Werkstoffzufuhr (7,8) zu dem Gehäuse (6) und in das Innere (9) des Gehäuses (6) und eine axial in diesem Gehäuse (6) verstellbare Verschlußnadel (10) sowie ferner einen mittels der Verschlußnadel (10) verschließbaren Auslaß für den Werkstoff aufweist, wobei die Verschlußnadel (10) in ihrem Inneren einen in ihrer Längsrichtung verlaufenden Kanal (11) für den Werkstoff hat, dieser Kanal (11) kürzer als die Verschlußnadel (10) ist, im Inneren (9) des Gehäuses (6) ein durch die Verschlußnadel (10) führender Eintritt (12) in den Kanal (11) vorgesehen ist, dieser Kanal vor dem der Spritzgießform (2) zugewandten freien Ende (10a) der Verschlußnadel (10) als Auslaß wenigstens einen seitlichen Austritt (13) hat und die Verschlußnadel (10) in ihrer Spritzgießposition mit dem diesen Austritt (13) aufweisenden Bereich aus dem einen Durchlaß (14) für die Verschlußnadel (10) aufweisenden Gehäuse (6) herausragt und/oder in die Spritzgießform (2) eingreift.

2. Nadelverschlußdüse mit Spritzgießform nach Anspruch 1, dadurch gekennzeichnet, daß der Kanal (11) im Inneren der Verschlußnadel (10) vor deren freiem Ende (10a) insbesondere an dem seitlichen Austritt (13) endet.

3. Nadelverschlußdüse mit Spritzgießform nach Anspruch 1 oder 2, dadurch gekennzeichnet, daß der/die seitlichen Austritte (13) der Verschlußnadel (10) in der aus der Spritzgießposition zurückgezogenen Stellung von der Innenwandung des Durchlasses (14) des Gehäuses (6) der Nadelverschlußdüse (1) verschlossen ist/sind.

4. Nadelverschlußdüse mit Spritzgießform nach einem der Ansprüche 1 bis 3, dadurch gekennzeichnet, daß die Verschlußnadel (10) mit ihrem seitlichen oder radialen Austritt (13) so weit in das Gehäuse (6) zurückziehbar ist, daß der Austritt (13) in der dadurch eingenommenen Schließstellung im Wirkbereich einer an dem Gehäuse (6) vorgesehenen Heizung (16) angeordnet ist.

5. Nadelverschlußdüse mit Spritzgießform nach einem der Ansprüche 1 bis 4, dadurch gekennzeichnet, daß die Länge des im Inneren der Verschlußnadel (10) insbesondere koaxial und zentral angeordneten Kanales (11) so bemessen ist, daß auch der Eintritt (12) in den Kanal (11) bei in Schließstellung zurückgezogener Verschlußnadel (10) innerhalb des Gehäuses (6) und/oder innerhalb einer dem Gehäuse (6) zugehörenden Nadelführung (27) angeordnet ist.

6. Nadelverschlußdüse mit Spritzgießform nach einem der Ansprüche 1 bis 5, dadurch gekennzeichnet, daß der im Inneren der Verschlußnadel (10) angeordnete Kanal (11) mehrere seitliche Austritte (13) hat, die radial oder schräg und/oder über eine Rundung von dem Kanal (11) abgehen und zur Außenseite der Verschlußnadel (10) führen und alle in der gleichen Querschnittsebene der Verschlußnadel (10) oder mit axialem Abstand zueinander in der Verschlußnadel (10) angeordnet sind.

7. Nadelverschlußdüse mit Spritzgießform nach einem der Ansprüche 1 bis 6, dadurch gekennzeichnet, daß der das Ende des Kanales (11) und seinen seitlichen Austritt (13) überragende Teil (15) der Verschlußnadel (10) als abdichtender Überstand (15) ausgebildet ist, der in Schließstellung den Durchlaß (14) des Gehäuses (6) ausfüllt und insbesondere teilweise über diesen Durchlaß (14) aus dem Gehäuse (6) vorsteht und bündig mit dem die Verschlußnadel (10) aufnehmenden Formeinsatz (3) und/oder dem damit zusammenwirkenden Kernformeinsatz (4) ist.

8. Nadelverschlußdüse mit Spritzgießform nach einem der Ansprüche 1 bis 7, dadurch gekennzeichnet, daß der anspritzseitige, die Verschlußdüse aufnehmende Formeinsatz (3) und der damit zusammenwirkende Formeinsatz (4) der Spritzgießform koaxial und fluchtend zu dem Durchlaß (14) des Gehäuses (6) der Nadelverschlußdüse (1) eine Lochung (17) oder Bohrung aufweisen, deren Innenquerschnitt dem Außenquerschnitt des dichtenden Überstandes (15) der Verschlußnadel (10) entspricht, und daß dieser Überstand (15) der Verschlußnadel bei deren Spritzposition in die Lochung (17) oder Bohrung des Formeinsatzes (4) dichtend eingreift.

9. Nadelverschlußdüse mit Spritzgießform nach einem der Ansprüche 1 bis 8, dadurch gekennzeichnet, daß der dem freien Ende (10a) und dem dichtenden Überstand (15) nähere Rand (18) des/der seitlichen Austritte (13) als Kante ausgebildet ist.

10. Nadelverschlußdüse mit Spritzgießform nach einem der Ansprüche 1 bis 9, dadurch gekennzeichnet, daß der Eintritt (12) in den in der Verschlußnadel (10) angeordneten Kanal (11) durch eine seitliche Aussparung oder Ausfräsung (19) der Nadel gebildet ist, die mit dem Anfang des Kanales (11) eine Verschneidung bildet.

11. Nadelverschlußdüse mit Spritzgießform nach einem der Ansprüche 1 bis 9, dadurch gekennzeichnet, daß der Kanal (11) im Bereich der seitlichen Aussparung (19) endet.

12. Nadelverschlußdüse mit Spritzgießform nach Anspruch 10 oder 11, dadurch gekennzeichnet, daß die Aussparung (9) an ihrem dem freien Ende (10a) der Verschlußnadel (10) abgewandten Anfang (19a) zunächst geringfügig und in Erstreckungsrichtung der Verschlußnadel (10) allmählich schräg zunehmend in den Nadelquerschnitt eingearbeitet ist, so daß zusammen mit der Innenwand (20) des Gehäuses (6) der Nadelverschlußdüse (1) eine im wesentlichen vorsprungfreie stetige Werkstoffzuführung zu dem Kanal (11) ausgebildet ist.

13. Nadelverschlußdüse mit Spritzgießform nach einem der Ansprüche 1 bis 12, dadurch gekennzeichnet, daß die Verschlußnadel (10) einen im wesentlichen kreisrunden Querschnitt hat und der Kanal (11) in dem Zentrum dieses Querschnittes angeordnet ist und vorzugsweise ebenfalls einen kreisförmigen Querschnitt aufweist.

14. Nadelverschlußdüse mit Spritzgießform nach einem der Ansprüche 1 bis 3, dadurch gekennzeichnet, daß die Innenhöhlung (9) des Gehäuses (6) exzentrisch auf der Seite der an der Verschlußnadel (10) angeordneten, zur Werkstoffzuführung in den Kanal dienenden Aussparung (19) angeordnet ist und das Gehäuse (6) eine Führung (21) der konzentrisch in ihm angeordneten Verschlußnadel (10) auf der dieser Innenhöhlung abgewandten Seite hat, die über mehr als den halben Umfang der Verschlußnadel (10) reicht, so daß an dieser Führung (21) im Bereich der Aussparung (19) der Nadel ein Spalt für den Durchtritt des Spritzgießwerkstoffes freibleibt.

15. Nadelverschlußdüse mit Spritzgießform nach einem der Ansprüche 1 bis 14, dadurch gekennzeichnet, daß an dem dem Austritt (14) des Gehäuses (6) entgegengesetzten Ende dieses Gehäuses (6) eine die Verschlußnadel (10) an ihrem gesamten Querschnitt führend umschließende, als Buchse ausgebildete Nadelführung (27) angeordnet ist und daß die Werkstoffzufuhr (8) in die Innenhöhlung (9) des Gehäuses (6) als Zuführkanal ausgebildet ist, dessen Eintritt (22) von der Stirnseite (23) bis zu seiner Mündung (24) im Inneren des Gehäuses (6) durch die in radialer Richtung einen Teil der Stirnseite (23) der Nadelverschlußdüse (1) bildende Nadelführungs-Buchse (27) verläuft, wobei zwischen der Außenseite der Buchse (27) und der diese aufnehmenden Ausnehmung (28) des Düsengehäuses (6) zumindest in dem seinem Widerlager (29) gegenüber dem Formeinsatz benachbarten Bereich eine Isolierung, zum Beispiel ein Luftspalt (30) angeordnet ist.

16. Nadelverschlußdüse mit Spritzgießform nach einem der Ansprüche 1 bis 15, dadurch gekennzeichnet, daß der/die Austritte (13) als über einen Teil des Umfanges der Verschlußnadel (10) verlaufender Schlitz ausgebildet ist, der so geformt ist, daß er in Gebrauchsstellung in Übereinstimmung mit der Begrenzung der Form (5) ist.

17. Nadelverschlußdüse mit Spritzgießform nach einem der Ansprüche 1 bis 16, dadurch gekennzeichnet, daß der Austritt (13) eine der Schmalseite des Werkstückes oder der Form (5) entsprechende Form hat.

## Claims

1. A needle shut-off nozzle (1) with an injection mould (2), this needle shut-off nozzle (1) having a housing (6), and a material supply (7,8) to the housing (6) and into the interior (9) of the housing (6), and a shut-off needle (10) which is axially adjustable in this housing (6), and furthermore an outlet for the material which can be closed by means of the shut-off needle (10), wherein the shut-off needle (10) has a channel (11) for the material which extends in the longitudinal direction in its interior, the channel (11) being shorter than the shut-off needle (10), an inlet (12) leading through the shut-off needle (10) in the interior (9) of the housing (6) being provided in the channel (11), this channel having as an outlet at least one lateral outlet (13) before the free end (10a) of the shut-off needle (10) which faces the injection mould (2) and the shut-off needle (10) in its injection-moulding position, with the area which has this outlet (13), projects out of this housing (6), which has a passage (14) for the shut-off needle (10), and/or engages in the jet mould (2).

2. A needle shut-off nozzle with an injection mould according to claim 1, characterised in that the channel (11) in the interior of the shut-off needle (10) ends before its free end (10a), especially at the lateral outlet (13).

3. A needle shut-off nozzle with an injection mould according to claim 1 or 2, characterised in that the lateral outlet/s (13) of the shut-off needle (10) is/are closed by the interior wall of the passage (14) of the housing (6) of the needle shut-off nozzle (1) in the position when they are retracted from the injection-moulding position.

4. A needle shut-off nozzle with an injection mould according to one of claims 1 to 3, characterised in that the shut-off needle (10) with its lateral or radial outlet (13) can be drawn back into the housing (6) to an extent wherein the outlet (13), in the closed position which it hereby assumes, is disposed in the effective area of a heating system (16) provided in the housing (6).

5. A needle shut-off nozzle with an injection mould according to one of claims 1 to 4, characterised in that the length of the channel (11) which is disposed especially coaxially and centrally in the interior of the shut-off needle (10) is designed so that in addition the inlet (12) is disposed in the channel (11) when the shut-off needle (10) is retracted into its closed position within the housing (6) and/or within a needle guide (27) affiliated with the housing (6).

6. A needle shut-off nozzle with an injection mould according to one of claims 1 to 5, characterised in that the channel (11) disposed in the interior of the shut-off needle (10) has a plurality of lateral outlets (13) which lead off radially or obliquely, and/or via a rounding, from the channel (11) and lead to the outside of the shut-off needle (10) and are all disposed in the same cross-sectional plane of the shut-off needle (10) or at an axial distance from one another in the shut-off needle (10).

7. A needle shut-off nozzle with an injection mould according to one of claims 1 to 6, characterised in that the part (15) of the shut-off needle (10) which projects over the end of the channel (11) and its lateral outlet (13) is configured as a sealing projection (15) which fills the passage (14) of the housing (6) in the closed position and especially partially projects via this passage (14) from the housing (6) and is flush with the mould insert (3) which receives the shut-off needle (10) and/ or the core mould insert which works in conjunction therewith.

8. A needle shut-off nozzle with an injection mould according to one of claims 1 to 7, characterised in that the injection-side mould insert (3) which receives the shut-off nozzle and the mould insert (4) of the injection mould which works in conjunction therewith have a hole (17) or bore coaxial and flush with the passage (14) of the housing (6) of the needle shut-off nozzle, the internal cross-section of which corresponds with the external cross-section of the sealing projection (15) of the shut-off needle (10), and that this projection (15) of the shut-off needle engages in a sealing manner in the hole (17) or bore of the mould insert (4) when in the injecting position.

9. A needle shut-off nozzle with an injection mould according to one of claims 1 to 8, characterised in that the margin (18) of the lateral outlet/s (13) which is closest to the free end (10a) and the sealing projection (15) is configured as an edge.

10. A needle shut-off nozzle with an injection mould according to one of claims 1 to 9, characterised in that the inlet (12) in the channel (11) disposed in the shut-off needle (10) is formed by a lateral notch or recess (19) in the needle which forms an intersection with the start of the channel (11).

11. A needle shut-off nozzle with an injection mould according to one of claims 1 to 9, characterised in that the channel (11) ends in the area of the lateral recess (19).

12. A needle shut-off nozzle with an injection mould according to claim 10 or 11, characterised in that the recess (9) is worked into the needle cross-section at its start (19a) which is remote from the free end (10a) of the shut-off needle (10), initially slightly and then gradually obliquely increasing in the extension direction of the shut-off needle (10), so that together with the interior wall (20) of the housing (6) of the needle shut-off nozzle (1), a substantially projection-free continuous material supply to the channel (11) is formed.

13. A needle shut-off nozzle with an injection mould according to one of claims 1 to 12, characterised in that the shut-off needle (10) has a substantially circular cross-section and the channel (11) is disposed in the centre of this cross-section and preferably also has a circular cross-section.

14. A needle shut-off nozzle with an injection mould according to one of claims 1 to 3, characterised in that the interior hollow (9) of the housing (6) is disposed eccentrically on the side of the recess (19) disposed on the shut-off needle (10) which serves for material supply into the channel, and the housing (6) has a guide (21) of the shut-off needle (10), which is concentrically disposed therein, on the side remote from this interior hollow, which extends over more than half the circumference of the shut-off needle (10) so that a gap remains free for passage of the injection-moulding material in this guide (21) in the area of the recess (19) of the needle.

15. A needle shut-off nozzle with an injection mould according to one of claims 1 to 14, characterised in that a needle guide (27) which is configured as a sleeve and which envelops the shut-off needle (10) in a guiding manner about its entire cross-section is disposed at the end of the housing (6) opposite the outlet (14) of this housing (6), and that the material supply (8) is configured in the interior space (9) of the housing (6) as a supply channel, the inlet (22) of which extends from the face side (23) up to its mouth (24) in the interior of the housing (6) through the needle guide sleeve (27) which forms a part of the face side (23) of the needle shut-off nozzle (1) in the radial direction, wherein an insulation, for example an air gap (30) is disposed between the outside of the sleeve (27) and the recess (28) of the jet housing (6) which accepts this, at least in the area adjacent to the abutment (29) opposite the mould insert.

16. A needle shut-off nozzle with an injection mould according to one of claims 1 to 15, characterised in that the outlet/s (13) is/are configured as a slot which extends about a part of the circumference of the shut-off needle (10) which is formed so that it corresponds with the limits of the mould (5) when in the position of use.

17. A needle shut-off nozzle with an injection mould according to one of claims 1 to 16, characterised in that the outlet (13) has a shape which corresponds to the narrow side of the piece of work or the mould (5).

## Revendications

1. Buse à fermeture par aiguille (1) avec moule d'injection (2), laquelle buse à fermeture par aiguille (1) présente un boîtier (6) et une alimentation de matière (7, 8) vers le boîtier (6) et l'intérieur (9) du boîtier (6) et une aiguille de fermeture (10) réglable de façon axiale dans ce boîtier (6), ainsi qu'en outre une sortie pour la matière fermable à l'aide de l'aiguille de fermeture (10), l'aiguille de fermeture (10) ayant dans son sens longitudinal un canal (11) intérieur pour la matière, ce canal (11) étant plus court que l'aiguille de fermeture (10), une entrée (12) dans le canal (11) traversant l'aiguille de fermeture (10) étant prévue à l'intérieur (9) du boîtier (6), ce canal ayant au moins une sortie (13) latérale comme évacuation devant l'extrémité libre (10a) de l'aiguille de fermeture (10) tournée vers le moule d'injection (2), et l'aiguille de fermeture (10), en position d'injection, dépassant du boîtier (6) présentant un passage (14) pour l'aiguille de fermeture (10) et/ou étant engagée dans le moule d'injection (2) avec la partie présentant cette sortie (13).

2. Buse à fermeture par aiguille avec moule d'injection selon la revendication 1, **caractérisée en ce que** le canal (11) se termine à l'intérieur de l'aiguille de fermeture (10) devant l'extrémité libre (10a) de cette dernière, notamment sur la sortie latérale (13).

3. Buse à fermeture par aiguille avec moule d'injection selon la revendication 1 ou 2, **caractérisée en ce que** la/les sortie(s) latérale(s) (13) de l'aiguille de fermeture (10) est/sont fermées, en position extraite de la position de moulage, par la paroi intérieure du passage (14) du boîtier (6) de la buse de fermeture par aiguille (1).

4. Buse à fermeture par aiguille avec moule d'injection selon l'une des revendications 1 à 3, **caractérisée en ce que** l'aiguille de fermeture (10) peut être rétractée dans le boîtier (6) avec sa sortie radiale ou latérale (13) de telle manière que la sortie (13), dans la position de fermeture ainsi prise, est placée dans la partie d'action d'un chauffage (16) prévu sur le boîtier (6).

5. Buse à fermeture par aiguille avec moule d'injection selon l'une des revendications 1 à 4, **caractérisée en ce que** la longueur du canal (11) placé notamment de façon coaxiale et centrale à l'intérieur de l'aiguille de fermeture (10) est dimensionnée de telle sorte que l'entrée (12) dans le canal (11), lorsque l'aiguille de fermeture (10) est rétractée en position de fermeture, est aussi placée à l'intérieur du boîtier (6) et/ou à l'intérieur d'un guidage d'aiguille (27) appartenant au boîtier (6).

6. Buse à fermeture par aiguille avec moule d'injection selon l'une des revendications 1 à 5, **caractérisée en ce que** le canal (11) placé à l'intérieur de l'aiguille de fermeture (10) possède plusieurs sorties latérales (13) qui partent du canal (11) radialement ou en biais et/ou sur un arrondi et qui mènent au côté extérieur de l'aiguille de fermeture (10) et toutes sont placées au même niveau de section de l'aiguille de fermeture (10) ou à intervalle axial les unes des autres dans l'aiguille de fermeture (10).

7. Buse à fermeture par aiguille avec moule d'injection selon l'une des revendications 1 à 6, **caractérisée en ce que** la partie (15) de l'aiguille de fermeture (10) dépassant de l'extrémité du canal (11) et sa sortie (13) latérale est formée comme une saillie (15) d'étanchéité qui, en position fermée, remplit le passage (14) du boîtier (6) et dépasse notamment du boîtier (6) en partie au-dessus de ce passage (14) et est au même niveau que l'insert de moule (3) logeant l'aiguille de fermeture (10) et/ou que l'insert de moule central (4) agissant avec l'insert de moule.

8. Buse à fermeture par aiguille avec moule d'injection selon l'une des revendications 1 à 7, **caractérisée en ce que** l'insert de moule (3) du côté moulage et logeant la buse à fermeture et l'insert de moule (4) agissant avec l'insert précédent du moule d'injection présentent un trou (17) ou un alésage de façon coaxiale et en alignement avec le passage (14) du boîtier (6) de la buse à fermeture par aiguille (1), alésage dont la section intérieure correspond à la section extérieure de la saillie (15) d'étanchéité de l'aiguille de fermeture (10), et en ce que cette saillie (15) de l'aiguille de fermeture est engagée de façon étanche dans le trou (17) ou l'alésage de l'insert de moule (4) en position d'injection de l'aiguille de fermeture.

9. Buse à fermeture par aiguille avec moule d'injection selon l'une des revendications 1 à 8, **caractérisée en ce que** le bord (18) proche de l'extrémité libre (10a) et de la saillie (15) d'étanchéité de la/des sortie(s) (13) latérale(s) (13) est formé comme une arête.

10. Buse à fermeture par aiguille avec moule d'injection selon l'une des revendications 1 à 9, **caractérisée en ce que** l'entrée (12) dans le canal (11) prévu dans l'aiguille de fermeture (10) est formée par un évidement latéral ou une fraisure (19) latérale de l'aiguille qui forme un recoupement avec le début du canal (11).

11. Buse à fermeture par aiguille avec moule d'injection selon l'une des revendications 1 à 9, **caractérisée en ce que** le canal (11) se termine dans la partie de l'évidement latéral (19).

12. Buse à fermeture par aiguille avec moule d'injection selon la revendication 10 ou 11, **caractérisée en ce que** l'évidement (9), sur son début (19a) détourné de l'extrémité libre (10a) de l'aiguille de fermeture (10) est d'abord travaillé de façon très réduite et dans le sens d'allongement de l'aiguille de fermeture (10) pour augmenter progressivement en biais dans la section de l'aiguille, de sorte qu'une alimentation de matière vers le canal (11), essentiellement sans avancée, est formée avec la paroi intérieure (20) du boîtier (6) de la buse à fermeture par aiguille (1).

13. Buse à fermeture par aiguille avec moule d'injection selon l'une des revendications 1 à 12, **caractérisée en ce que** l'aiguille de fermeture (10) possède une section essentiellement circulaire et que le canal (11) est placé au centre de cette section et présente de préférence également une section circulaire.

14. Buse à fermeture par aiguille avec moule d'injection selon l'une des revendications 1 à 3, **caractérisée en ce que** l'excavation intérieure (9) du boîtier (6) est placée de façon excentrique sur le côté de l'évidement (19) placé sur l'aiguille de fermeture et servant à l'alimentation de matière dans le canal, et que le boîtier (6) a un guidage (21) de l'aiguille de fermeture (10) placée de façon concentrique dans celui-ci sur le côté opposé à cette excavation intérieure qui atteint plus que la moitié de la circonférence de l'aiguille de fermeture (10), de sorte qu'une fente reste libre pour le passage de la matière à injecter dans la partie de l'évidement (19) de l'aiguille.

15. Buse à fermeture par aiguille avec moule d'injection selon l'une des revendications 1 à 14, **caractérisée en ce qu**'un guidage d'aiguille (27) formé comme une douille et entourant toute la section de l'aiguille de fermeture (10), est prévu sur l'extrémité du boîtier (6) opposée à la sortie (14) de ce boîtier (6), et en ce que l'alimentation en matière (8) est formée comme canal d'alimentation dans l'excavation intérieure (9) du boîtier (6), dont l'entrée (22) passe du côté frontal (23) jusqu'à son embouchure (24) à l'intérieur du boîtier (6) en traversant une partie du côté frontal (23) de la douille (27) du guidage d'aiguille formant la buse à fermeture par aiguille (1) en sens radial, une isolation, par exemple une fente d'air (30), étant placée entre le côté extérieur de la douille (27) et l'évidement (28) du boîtier (6) de la buse logeant cette douille, au moins dans la partie adjacente à sa contre-butée (29) à l'opposé de l'insert de moule.

16. Buse à fermeture par aiguille avec moule d'injection selon l'une des revendications 1 à 15, **caractérisée en ce que** la/les entrée(s) (13) est/sont formée(s) comme une fente s'étendant sur une partie de la circonférence de l'aiguille de fermeture (10), formée de telle façon qu'elle coïncide, en position d'utilisation, à la limitation du moule (5).

17. Buse à fermeture par aiguille avec moule d'injection selon l'une des revendications 1 à 16, **caractérisée en ce que** la sortie (13) a la forme correspondant au côté étroit de la pièce à usiner ou du moule (5).
